# EUROPÄISCHE PATENTSCHRIFT

(11) **EP 1 805 429 B1**
(45) Veröffentlichungstag und Bekanntmachung des Hinweises auf die Patenterteilung: **13.01.2010**
(21) Anmeldenummer: 05797202.8
(22) Anmeldetag: 17.10.2005
(51) Int. Cl.: F16D 65/092, F16D 55/00, F16D 55/227

(54) **SCHEIBENBREMSE MIT OPTIMIERTER SATTELLAGERUNG UND BREMSBELAG**
DISC BRAKE WITH OPTIMISED CALIPER MOUNTING AND BRAKE LINING
FREIN A DISQUE A SUPPORT D'ETRIER OPTIMISE ET GARNITURE DE FREIN

(30) Priorität: 18.10.2004 DE 102004050667
(43) Veröffentlichungstag der Anmeldung: 11.07.2007
(73) Patentinhaber: KNORR-BREMSE Systeme für Nutzfahrzeuge GmbH, 80809 München (DE)
(72) Erfinder: GRUBER, Robert, 83539 Pfaffing (DE); MACKE, Wlodzimierz, 82140 Olching (DE); KNOOP, Dietmar, 82067 Ebenhausen (DE); KEMPINGER, Georg, 81735 München (DE); PRITZ, Wolfgang, 84501 Aldersbach (DE)
(74) Vertreter: Mattusch, Gundula
(86) Internationale Anmeldenummer: PCT/EP2005/011144
(87) Internationale Veröffentlichungsnummer: WO 2006/042726

(56) Entgegenhaltungen:
- EP-A- 0 218 033
- EP-A- 0 375 956
- WO-A-2004/083667
- DE-A1- 4 126 339
- FR-A- 1 440 107
- GB-A- 1 500 907
- US-A- 3 190 397
- US-A- 3 346 076
- US-A- 4 305 483
- US-A- 4 732 242
- US-A- 5 429 216
- US-B1- 6 182 801
- PATENT ABSTRACTS OF JAPAN Bd. 008, Nr. 182 (M-319), 22. August 1984 (1984-08-22) -& JP 59 073633 A (AKEBONO BRAKE), 25. April 1984 (1984-04-25)
- PATENT ABSTRACTS OF JAPAN Bd. 1996, Nr. 11, 29. November 1996 (1996-11-29) -& JP 08 189538 A (NISSIN), 23. Juli 1996 (1996-07-23)

## Beschreibung

Die Erfindung betrifft einen in eine Scheibenbremse eingebauten Bremsbelag, insbesondere für Nutzfahrzeuge, nach dem Oberbegriff des Anspruchs 1.

Solche Scheibenbremsen weisen beispielsweise als pneumatische Antriebseinrichtung einen pneumatisch betätigten Bremszylinder auf, der mit einer Kolbenstange auf die Zuspanneinheit, insbesondere den Drehhebel der Zuspanneinheit einwirkt.

Die elektromechanische Antriebseinrichtung kann ein Elektromotor sein, der auf die Zuspanneinrichtung einwirkt.

Ein gattungsgemäßer Bremsbelag ist aus der DE 41 26 339 A1 oder der US 3 190 397 bekannt.

Scheibenbremsen lassen sich nach dem gewählten Prinzip der Krafteinleitung in zwei Grundbauarten einteilen: Krafterzeugung und Verschleißnachstellung beidseits der Bremsscheibe: z.B. hydraulische Festsattelscheibenbremse mit axial fixierter Bremsscheibe und Krafterzeugung beidseits der Bremsscheibe, sowie Krafterzeugung und Verschleißnachstellung auf einer Seite der Bremsscheibe und Übertragung der Betätigungskraft auf die abgewandte Seite nach dem Reaktionskraftprinzip: z.B. Schiebesattelscheibenbremse, Schwenksattelscheibenbremse, Festsattelscheibenbremse mit verschiebbarer Bremsscheibe.

Druckluftbetätigte Scheibenbremsen für schwere Nutzfahrzeuge mit Felgendurchmessern von 15 Zoll und mehr nutzen üblicherweise das Reaktionskraftprinzip, da aufgrund der beengten Einbauverhältnisse am Fahrzeugrad die Anordnung eines Druckluft- Betätigungszylinders nur auf der zur Fahrzeuginnenseite offenen Seite des Fahrzeugrades möglich ist. Derartige Konstruktionen zeigen z.B. die DE 36 10 569 A1, die DE 37 16 202 A1, die EP 0 531 321 A1 (siehe hier insbesondere die Konstruktion der Nachsteller nach Art von Drehantrieben) und die EP 0 688 404 A1.

Zuspanneinrichtungen der hier beschriebenen Art mit einem exzentrisch gelagerten Drehhebel und wenigstens einem, vorzugsweise zwei insbesondere axial längenveränderlichen Druckstempeln, denen zum Zwecke der Längenveränderung wenigstens eine Nachstellvorrichtung zugeordnet ist, sind prinzipiell auch im Bremssattel der hier nachfolgend als erfindungsgemäß beschrieben Scheibenbremse einsetzbar.

Alternativ kann auch eine andere Art der Drehhebelanordnung eingesetzt werden, wobei vorzugsweise nur zuspannseitig eine Nachstellvorrichtung vorgesehen ist.

Schiebesattel oder Schwenksattel-Scheibenbremsen benötigen ein achsfestes Bauteil - i.allg. Bremsträger genannt - welches die Bremsschuhe/Bremsbeläge hält bzw. führt und bei Bremsbetätigung deren Umfangskräfte aufnimmt sowie den koaxial zur Fahrzeugachse verschiebbar gelagerten Bremssattel trägt. Die vorliegende Erfindung widmet sich dabei insbesondere der Optimierung von Schiebesattel-Scheibenbremse.

Die Schaffung einer optimierten gattungsgemäßen Scheibenbremse ist die Aufgabe der Erfindung.

Vorzugsweise soll eine insbesondere in Hinsicht auf die Einbauraumverhältnisse und vorzugsweise auch in Hinsicht auf ihr Gewicht weiter optimierte Schiebesattel-Scheibenbremse geschaffen werden.

Die Erfindung löst diese Aufgabe durch den Gegenstand des Anspruchs 1.

Vorteilhafte Ausgestaltungen sind den Unteransprüchen zu entnehmen.

Nachfolgend werden Ausführungsbeispiele der Erfindung unter Bezug auf die Zeichnung näher erläutert. Es zeigen:

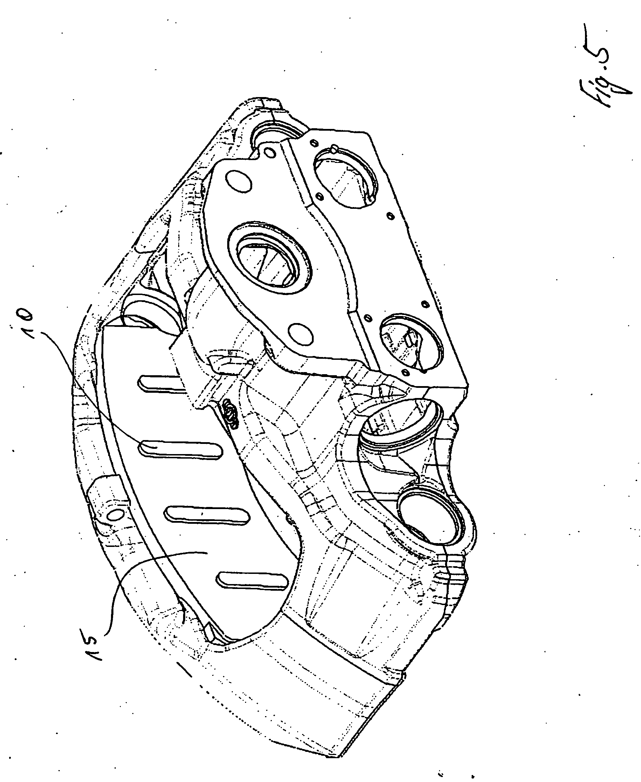

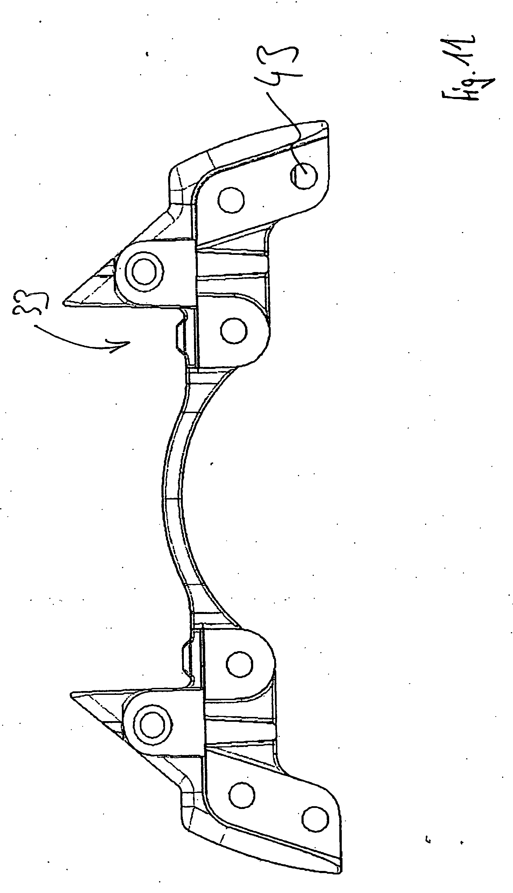

- Fig. 1 - 11: verschiedene Ansichten von Elementen einer Schei benbremse, die zur Aufnahme als erfindungsgemäßen Bremsbelag vorgesehen ist
- Fig 12, 13: den erfindungsgemäßen Bremsbelag

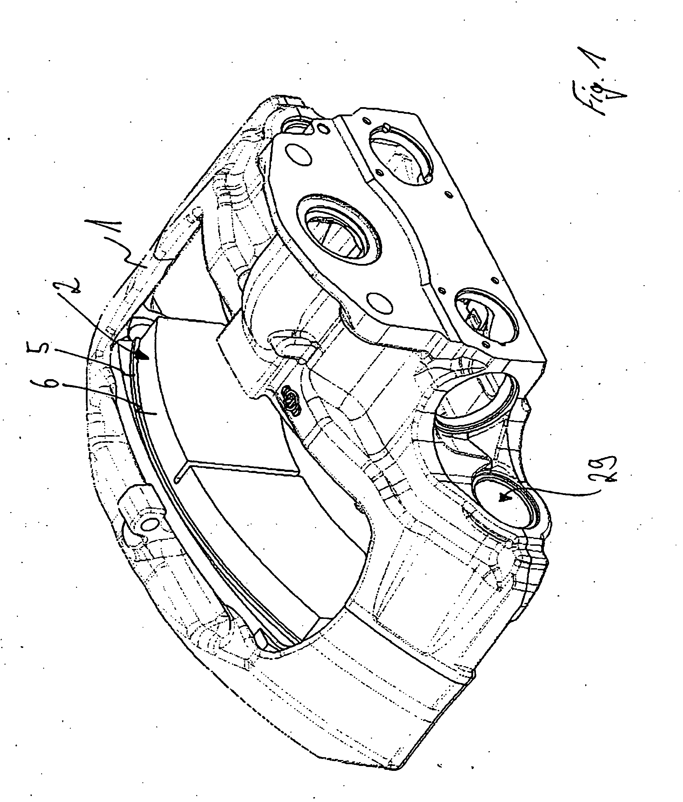

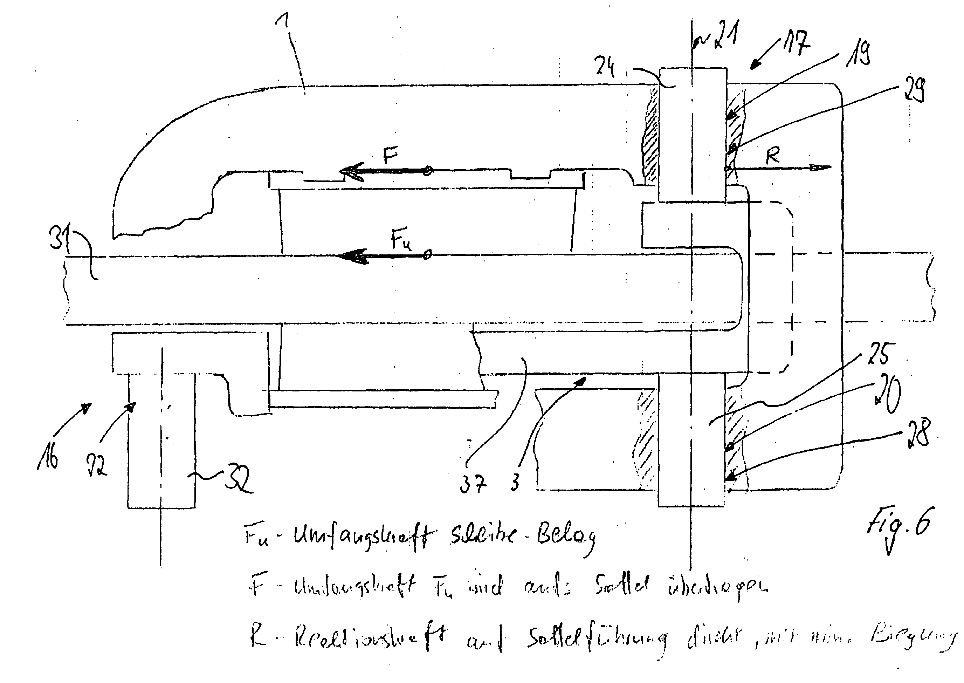

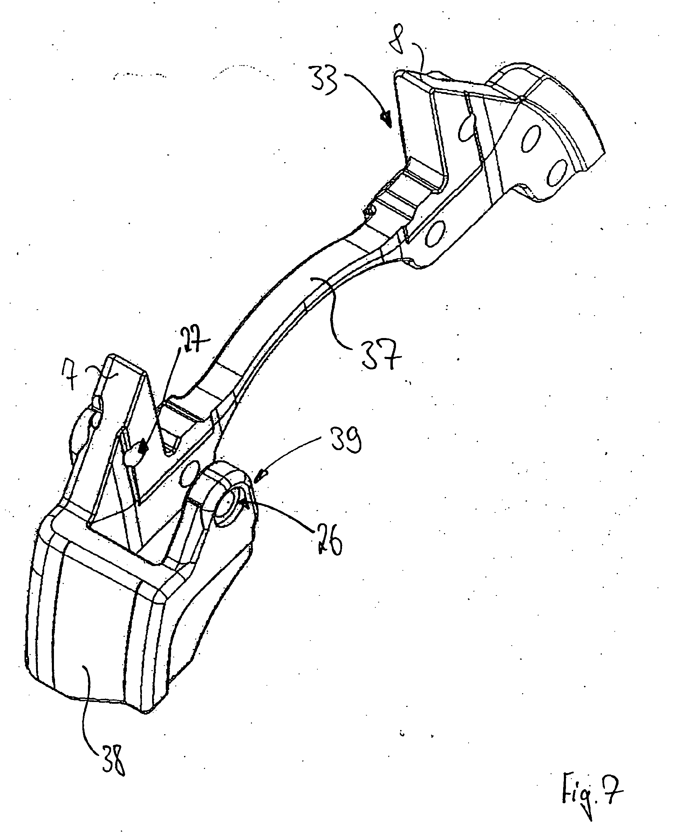

Fig. 1 zeigt einen Bremssattel 1 für eine Scheibenbremse für Nutzfahrzeuge, mit einem reaktionsseitigen Bremsbelag 2 und einem Bremsträger 3 (Fig. 6, Fig. 7), ohne dass die Zuspanneinrichtung oder der zuspannseitige Bremsbelag dargestellt wären.

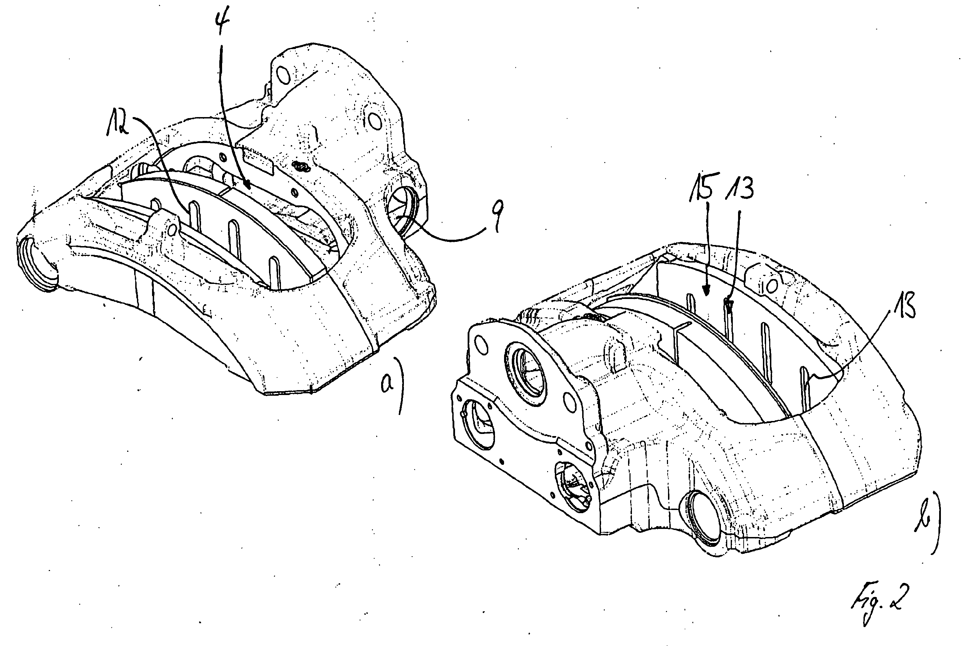

Die nicht dargestellten Elemente könnten beispielsweise nach Art der DE 36 10 569 A1, der DE 37 16 202 A1, der EP 0 531 321 A1 oder der EP 0 688 404 A1 aufgebaut sein. Insoweit wird vollumfänglich auf diese Schriften verwiesen. Die Montage der Zuspanneinrichtung erfolgt vorzugsweise durch die bremsscheibenzugewandte Öffnung 4 (Fig. 2) des Bremssattels. Eine Bearbeitung/Inspektion kann durch die kleinere weitere Öffnung 9 im seitlichen hinteren Bereich des Sattels erfolgen.

Beide Bremsbeläge weisen einen Bremsbelagträger mit darauf aufgebrachten Belagmaterial 6 auf.

Während der zuspannseitige Bremsbelag aber grundsätzlich oder vorzugsweise nach Art der EP 0 531 321 A1 oder EP 0 688 404 A1 aufgebaut sein kann und von einer Belagniederhaltefeder in einem Schacht im Bremsträger 3 gehalten wird, um ihn radial zu fixieren, wobei der Bremsträger 3 beidseits des Bremsbelages zwei Holme bzw. Vorsprünge 7, 8 aufweist, um die in Umfangsrichtung der Scheibe wirkenden Kräfte aufzunehmen, ist die Konstruktion auf der Reaktionsseite anders.

Auf der Reaktionsseite wird der Bremsbelag 5 über wenigstens einen Vorsprung direkt am Bremssattel und nicht am Bremsträger gehalten.

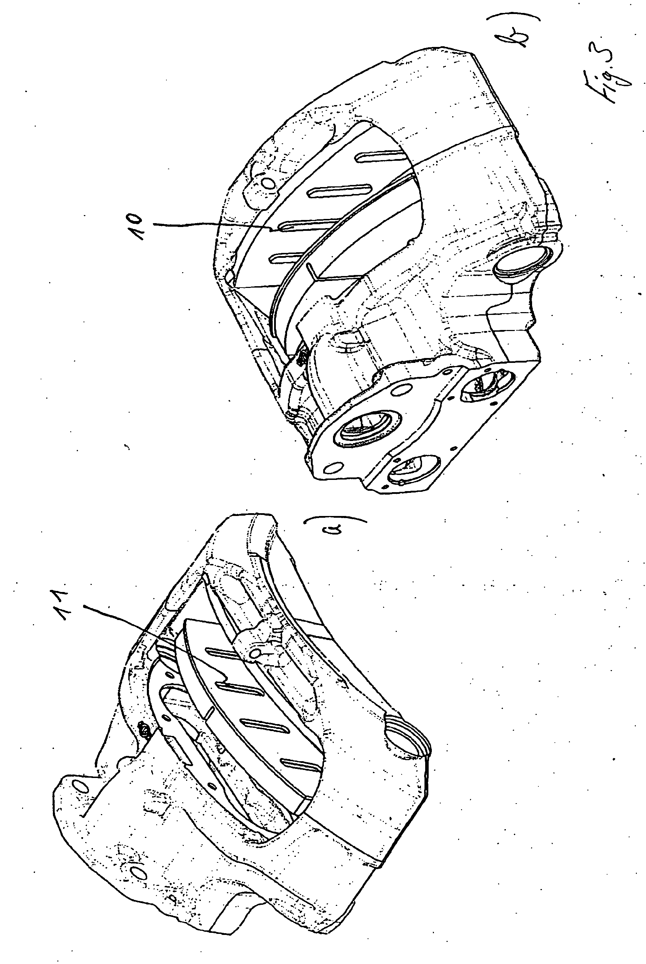

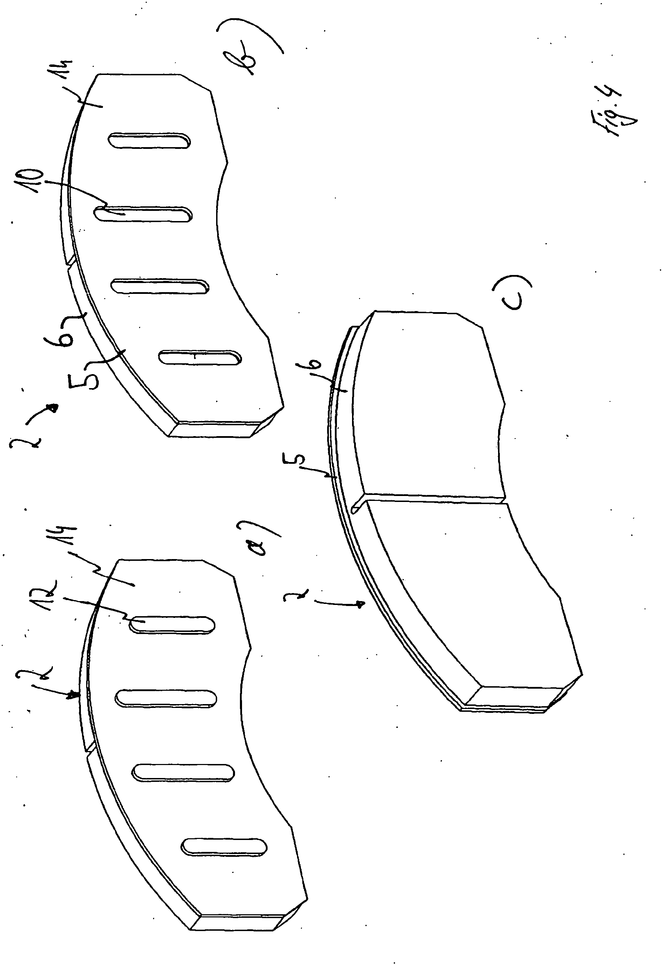

Hierzu ist vorgesehen, dass
- der Bremsbelagträger 5 wenigstens eine oder vorzugsweise mehrere Ausnehmungen 11 (Fig. 3a) aufweist, in welche wenigstens ein korrespondierendes vorragendes Element 10 (Fig. 3b) eingreift, dass mit dem Bremssattel (1) einstückig verbunden oder an diesem fixiert ist, und/oder dass
- dass der Bremsbelagträger 5 wenigstens eine oder vorzugsweise mehrere Ausnehmungen 11 aufweist, in welche wenigstens ein korrespondierendes separates Element (hier nicht dargestellt) eingreift, dass ferner in korrespondierende Ausnehmung(en) 13 eingreift(eingreifen), die im Bremssattel ausgebildet sind (letztere Variante hier nicht dargestellt). Zusätzlich kann der Bremsbelagträger 5 wenigstens einen oder vorzugsweise mehrere vorragen de Elemente 12 (Fig. 2a; Fig. 4a) aufweisen, die in korrespondierende Ausneh- mung(en) 13 eingreift(eingreifen) (Fig. 2b), die im Bremssattel ausgebildet sind.

Die Elemente/insbesondere Vorsprünge 10, 12 können stiftartig und/oder leistenartig ausgebildet sein. Bevorzugt wird eine leistenartige Ausbildung. Die Ausnehmungen 11, 13 werden korrespondierend ausgebildet. Hierbei wird wiederum eine radiale Ausrichtung bevorzugt.

Vorzugsweise sind mehrere leistenartige Vorsprünge/Elemente 10, 12 vorgesehen, die in korrespondierende nutenartige Ausnehmungen eingreifen.

Die mehreren Elemente und die korrespondierenden Ausnehmungen 10 - 13 liegen vorzugsweise parallel zueinander, wobei dann das/die mittlere(n) Element(e) radial oder zumindest nahezu radial zur Bremsscheibenachse ausgerichtet sind.

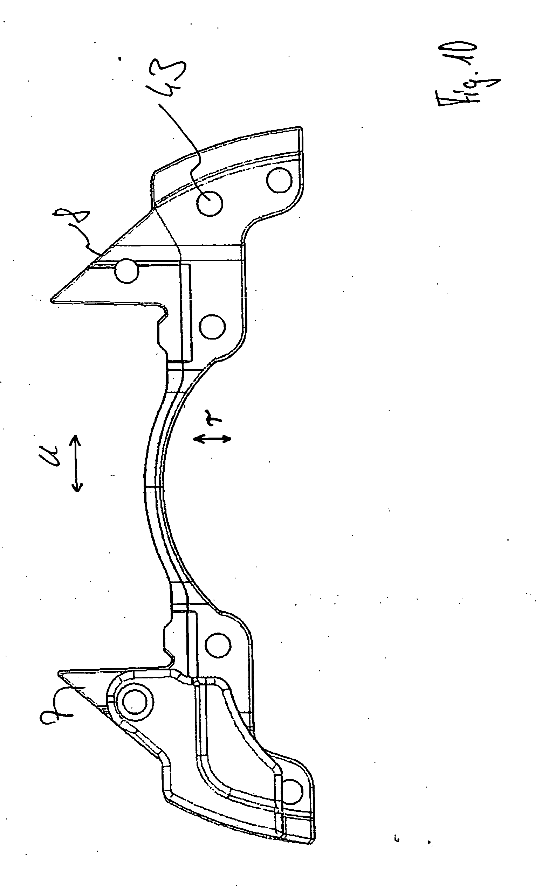

Derart wird der Bremsbelag 2 auf einfache Weise radial - r - und in Umfangsrichtung - u - (Fig. 10) gesichert, ohne das reaktionsseitig eine Niederhaltefeder erforderlich wäre. Auf eine Bremsträgerabstützung kann u.U., ganz verzichtet werden. Vorzugsweise erfolgt aber noch zumindest einseitig in Umfangsrichtung eine Abstützung am Bremsträger.

Vorteilhaft ist, dass über die Ausnehmungen und Elemente 10 - 13 auch Bremskräfte in Umfangsrichtung u am Bremssattel abgestützt werden. Ein derart großes Drehmoment auf die Scheibe, wie es auftreten würde, wenn der zuspannseitige und reaktionsseitige Bremsbelag in Umfangsrichtung zueinander versetzt angeordnet würden, wird dabei vermieden.

Bis auf die Vorsprünge und/oder Ausnehmungen 10 - 13 sind die Anlagefläche 15 für die Belagträgerplatte und auch die Anlagefläche 14 derselben vorzugsweise eben ausgebildet.

Diese Erfindung macht es auch möglich, die Belagträgerplatte sehr dünn, um 3 mm herum, z.B. 3 - 5 mm dünn, auszugestalten.

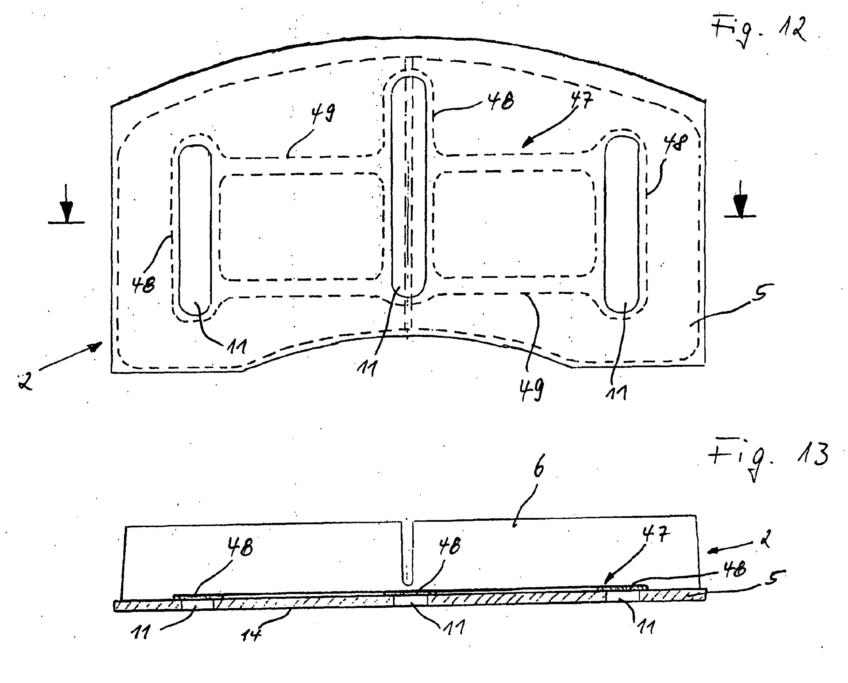

Um einen einwandfreien Formschluss der Vorsprünge 10 des Bremssattels 1 mit dem Bremsbelag 2 zu gewährleisten, das heißt, für ein ungehindertes Eingreifen der Vorsprünge 10 in die Ausnehmungen 11 des Bremsbelagträgers, sind die Ausnehmungen 11, wie in den Figuren 12 und 13 dargestellt, auf der dem Belagmaterial 6 zugewandten Seite durch Abdeckstreifen 48 verschlossen, wobei alle Abdeckstreifen 48 durch Streben 49 miteinander verbunden sind, so dass ein gitterförmiger Abdeckrahmen 47 gebildet ist.

Dieser Abdeckrahmen 47 besteht aus einem dünnen Blech und wird vor dem Aufbringen der Belagmasse des Belagmaterials 6 so auf dem Bremsbelagträger 5 positioniert, dass die Ausnehmungen 11 vollständig verschlossen sind.

Hierzu sind die Abdeckstreifen 48, die im übrigen auch einzeln aufgelegt sein können, also nicht in Form eines gitterförmigen Rahmens, so dimensioniert, dass sie die Grundfläche der Ausnehmungen 11 jeweils seitlich überragen.

Durch das Abdecken der Ausnehmungen 11 wird verhindert, dass Belagmasse in die Ausnehmungen 11 gelangt und durch aufwendige Bearbeitung entfernt werden muss.

Die Zusammenfassung der Abdeckstreifen 48 zu einem Abdeckrahmen 47 erleichtert die Handhabung beim Einlegen, wobei die Herstellung des Abdeckrahmens 47 sehr einfach ist, da dieser als einstückiges Stanzteil hergestellt sein kann.

Die Ausgestaltung des reaktionsseitigen Bremsbelages 2 ist für Scheibenbremskonstruktionen verschiedenster Art geeignet, so z.B. auch für Schwenksattelbremsen aber auch für Schiebesattelbremsen.

Ganz bevorzugt wird sie aber bei der nachfolgend beschriebenen Ausgestaltung der Schiebesattellagerung am Bremsträger eingesetzt, die sie in besonders vorteilhafter Weise ergänzen kann.

Es wird eine Scheibenbremse mit einem Schiebesattel geschaffen, bei welcher der Schiebesattel 1 mit einer Loslageranordnung 16 und einer Festlageranordnung 17 an einem achsfesten Teil - Bremsträger genannt - befestigt sind. Die Loslageranordnung hat ein größeres Spiel als die Festlageranordnung.

Dabei teilt sich eine der beiden Lageranordnungen 16, 17, insbesondere die Festlageranordnung 17, in zwei einzelne Festlager 19, 20 auf, wohingegen nur ein einziges Loslager 22 vorgesehen ist.

Theoretisch denkbar wäre es auch, die Loslageranordnung 16 in zwei einzelne Loslager aufzuteilen und dann nur ein einziges Festlager vorzusehen (hier nicht dargestellt). Bevorzugt wird aber die Anordnung mit zwei Festlagern und nur einem einzigen Loslager, da das Festlager in der Regel länger sein muß als das Loslager, so dass es sinnvoll ist, ein langes Festlager in zwei jeweils (deutlich) kürzere Festlager aufzuteilen. Eine Aufteilung des Loslagers kann dagegen vermieden werden, da dieses an sich bereits genügend kurz ausgebildet werden kann.

Die Achsen der beiden Festlager 19, 20 sind vorzugsweise axial zueinander versetzt auf einer Geraden 21 (siehe Fig. 6) angeordnet.

Die Festlager bestehen vorzugsweise jeweils aus Bolzen 24, 25, die am Bremsträger 3 angeordnet sind (z.B. verschraubt in Öffnungen 26, 27) und dann korrespondierende Lageröffnungen, insbesondere Bohrungen, 28, 29 im Bremssattel 1 durchsetzen. Zwischen den Bolzen 24, 25 und den Bohrungen 28, 29 können eine oder mehrere Buchsen angeordnet sein. Hierzu sind verschiedene Ausgestaltungen aus dem Stand der Technik bekannt. Das Spiel der Festlager ist kleiner als das des Loslagers.

Durch die Unterteilung werden zwei an sich kurze Festlager 19, 20 geschaffen, deren Eigenschaften denen eines einzigen entsprechend langen Festlagers (d.h. sich von einem der Lager bis zum anderen erstreckende) ähneln, ohne dass dessen Bauraum benötigt würde. Wird eine derartige Anordnung realisiert, kann Bauraum eingespart werden, denn die beiden Festlager sind kürzer als ein langes Festlager auf einer Seite der Bremsscheibe sein müsste und dennoch vorteilhafterweise nur ein einziges vorzugsweise zuspannseitiges (bezogen auf die Mittelebene 30 der Bremsscheibe 31) Loslager eingesetzt werden, von dem in Fig. 6 nur der Bolzen 32 abgebildet ist.

Durch die gewählte Konstruktion insbesondere in Verbindung mit dem erfindungsgemäßen Bremsbelag wird eine weitere Option realisierbar.

Danach wird gemäß Fig. 7 ff. der Bremsträger so ausgebildet, dass er zuspannseitig einen Belagschacht 33 ausbildet, an dem sich der zuspannseitige Bremsbelag in beiden Umfangsrichtungen U an Vorsprüngen bzw. Holmen 7, 8 abstützt, die über eine Strebe 37 gemeinsam verbunden sind.

Auf der Reaktionsseite ist eine derartige Abstützfläche nicht mehr erforderlich. Der Bremsträger 3 erstreckt sich daher von der Zuspannseite aus nur mit einem kurzen axialen Ansatz 38 axial bis auf die Reaktionsseite, was dazu dient, das reaktionsseitige Festlager zu realisieren.

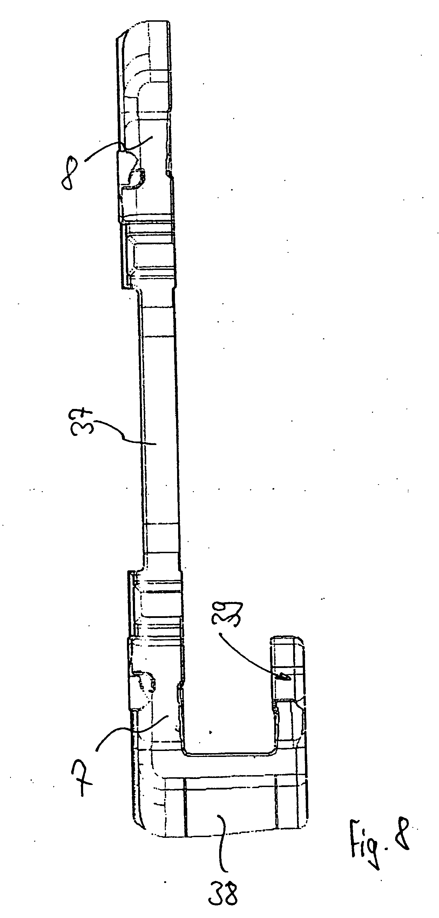

In Draufsicht der Fig 8 ist der Bremsträger im wesentlichen L-förmig. Dabei weist er zuspannseitig die Strebe 37 auf, die sich in Montageposition (siehe auch Fig. 6) parallel zur Bremsscheibe 31 an der Zuspannseite erstreckt. Von einem Ende der Streb 37 aus erstreckt sich sodann der Ansatz 38 axial neben der Bremsscheibe 31 bis zur Reaktionsseite. Der Ansatz 38 ist wiederum in sich gewinkelt ausgebildet und bildet einen Holm 39 zur Befestigung des reaktionsseitigen Festlagers aus, der sich parallel zur Bremsscheibe erstreckt.

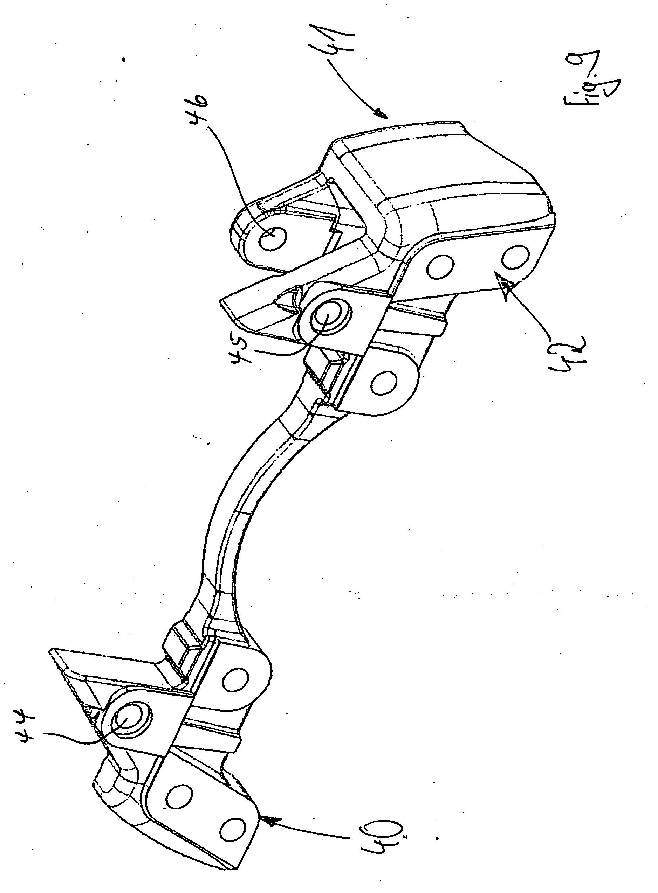

Im in der Stellung der Fig. 9 unteren Bereich (in Einbauposition zur Achse hin) unterhalb der drei Holme 7, 8, 39 sind jeweils drei Montagebereiche 40, 41, 42 zur einfachen und dennoch sicheren Montage des Bremsträgers an einem Achsflansch oder dgl. geschaffen. In den drei Montagebereichen 40 - 42 können jeweils wiederum mehrere Öffnungen 43 zum Befestigen mittels Bolzen am Achsflansch vorgesehen sein.

Im zum Bremssattel gewandten Bereich sind die drei Öffnungen 44 - 46 zur Aufnahme der Bolzen für die Fest- und Loslager ausgebildet.

Der derart ausgebildete Bremsträger 3 ist besonders leicht, da er keine vier Holme und zwei Streben sondern nur eine Strebe und drei Holme benötigt. Er ist ferner auch einbauraumoptimiert.

## Patentansprüche

1. In eine Scheibenbremse eingebauter Bremsbelag, bei dem
- ein ein Belagmaterial (6) tragender Bremsbelagträger (5) mehrere Ausnehmungen (11) (Fig. 3a) aufweist, die dazu ausgelegt sind, dass in sie jeweils ein korrespondierendes Element (10) eingreift, das mit einem Bremssattel (1) einstückig verbunden oder an diesem fixiert ist und von diesem vorragt, und/oder
- der Bremsbelagträger (5) mehrere Ausnehmungen (11) aufweist, in welche jeweils wenigstens ein korrespondierendes separates Element eingreifen kann, das ferner in eine korrespondierende Ausnehmung (13) eingreifen kann, die im Bremssattel (1) ausgebildet ist, wobei zusätzlich der Bremsbelagträger (5) mehrere vorragende Elemente (12) aufweisen, kann, die dazu ausgelegt sind, in korrespondierende Ausnehmungen (13) einzugreifen, die im Bremssattel (1) ausgebildet sind, **dadurch gekennzeichnet, dass** die Ausnehmungen (11) des Bremsbelagträgers (5) auf dessen dem Belagmaterial (6) zugewandten Seite durch vor dem Aufbringen des Belagmaterials (6) aufgebrachte Abdeckstreifen (48) abgedeckt sind, wobei die Abdeckstreifen (48) durch Streben (49), unter Bildung eines Abdeckrahmens (47), miteinander verbunden sind.

2. Bremsbelag nach Anspruch 1, **dadurch gekennzeichnet, dass** jeder, eine Ausnehmung (11) abdeckende Abdeckstreifen (48) die zugeordnete Ausnehmung (11) seitlich überragt.

3. Bremsbelag nach Anspruch 1 oder 2, **dadurch gekennzeichnet, dass** der Abdeckrahmen (47) gitterförmig ausgebildet ist.

4. Bremsbelag nach Anspruch 1, **dadurch gekennzeichnet, dass** die Abdeckstreifen (48) bzw. der Abdeckrahmen aus einem Blech bestehen.

5. Bremsbelag nach Anspruch 4, **dadurch gekennzeichnet, dass** der Abdeckrahmen (47) als Stanzteil ausgebildet ist.

## Claims

1. Brake lining incorporated into a disc brake, in which
- a brake lining carrier (5) carrying a lining material (6) has a plurality of recesses (11) (fig. 3a) which are designed such that they respectively engage a corresponding element (10), which is connected in one piece or is fixed to a brake caliper (1) and projects therefrom, and/or
- the brake lining carrier (5) has a plurality of recesses (11), into which respectively can engage at least one corresponding separate element, which can also engage a corresponding recess (13) formed in the brake caliper (1), wherein additionally
- the brake lining carrier (5) can have a plurality of projecting elements (12) which are designed so as to engage corresponding recesses (13) formed in the brake caliper (1), **characterised in that** the recesses (11) of the brake lining carrier (5) are covered by covering strips (48) applied to the side turned towards the lining material (6) prior to applying the lining material (6), wherein the covering strips (48) are connected to each other by struts (49) while forming a covering frame (47).

2. Brake lining according to claim 1, **characterised in that** each covering strip (48) covering a recess (11) laterally projects beyond the associated recess (11).

3. Brake lining according to claim 1 or 2, **characterised in that** the covering frame (47) is formed in the shape of a grid.

4. Brake lining according to claim 1, **characterised in that** the covering strips (48) or the covering frame consist of sheet metal.

5. Brake lining according to claim 4, **characterised in that** the covering frame (47) is formed as a punched part.

## Revendications

1. Garniture de frein montée dans un frein à disque, dans laquelle
- un support de garniture de frein (5), qui porte un matériau de garniture (6), comprend plusieurs creux (11) (Fig. 3a) qui sont conçus pour la prise d'un élément correspondant respectif (10) dans lesdits creux, qui est intégralement relié à un étrier de frein (1) ou fixé au dernier, en faisant saillie à partir du dernier, et/ou
- ledit support de garniture de frein (5) comprend plusieurs creux (11) dans lesquels au moins un élément correspondant séparé respectif peut se trouver en prise, qui peut au plus se rendre en prise dans un creux correspondant (13) formé dans ledit étrier de frein (1 ),
- audit support de garniture de frein (5) éventuellement comprenant, au plus, plusieurs éléments (12) en saillie, qui sont conçus pour la prise dans des creux (13) dans ledit étrier de frein,
**caractérisé en ce que**, du côté en face dudit matériau de garniture (6), lesdits creux (11) dudit support de garniture de frein (5) sont recouvert par des bandes de recouvrement (48) appliquées avant le dépôt dudit matériau de garniture (6), auxdites bandes de recouvrement (48) étant reliées l'une à l'autre par des étais (49), en formant un cadre de recouvrement (47).

2. Garniture de frein selon la revendication 1, **caractérisé en ce que** chacune desdites bandes de recouvrement (48), qui recouvre un creux (11), fait saillie latéralement du creux y affecté (11).

3. Garniture de frein selon la revendication 1 ou 2, **caractérisé en ce que** ledit cadre de recouvrement (47) présente une configuration en grille.

4. Garniture de frein selon la revendication 1, **caractérisé en ce que** lesdites bandes de recouvrement (48) ou respectivement ledit cadre de recouvrement consistent en une tôle.

5. Garniture de frein selon la revendication 4, **caractérisé en ce que** ledit cadre de recouvrement (47) est formé sous forme d'une pièce fabriquée à la presse.
